(19) Europäisches Patentamt / European Patent Office / Office européen des brevets

(11) **EP 4 389 271 A1**

(12) **EUROPÄISCHE PATENTANMELDUNG**

(43) Veröffentlichungstag:
**26.06.2024 Patentblatt 2024/26**

(21) Anmeldenummer: **23204210.1**

(22) Anmeldetag: **17.10.2023**

(51) Internationale Patentklassifikation (IPC):
**B01F 25/316** (2022.01)   **B67D 1/00** (2006.01)
**C02F 1/68** (2023.01)

(52) Gemeinsame Patentklassifikation (CPC):
**C02F 1/686; B01F 25/316; B67D 1/0078;**
C02F 1/688; C02F 2201/006; C02F 2209/40

(84) Benannte Vertragsstaaten:
**AL AT BE BG CH CY CZ DE DK EE ES FI FR GB
GR HR HU IE IS IT LI LT LU LV MC ME MK MT NL
NO PL PT RO RS SE SI SK SM TR**
Benannte Erstreckungsstaaten:
**BA**
Benannte Validierungsstaaten:
**KH MA MD TN**

(30) Priorität: **20.12.2022 DE 102022134234**

(71) Anmelder: **ACLARIS GmbH, Lindau
Zweigniederlassung Rebstein
9445 Rebstein (CH)**

(72) Erfinder: **Heitele, Dr. Bernd-Karl-Josef
9437 Marbach (CH)**

(74) Vertreter: **Otten, Roth, Dobler & Partner mbB
Patentanwälte
Großtobeler Straße 39
88276 Berg / Ravensburg (DE)**

(54) **MINERALISIERUNGSKARTUSCHE ZUR VOLUMENSTROMABHÄNGIGEN MINERALISIERUNG VON TRINKWASSER**

(57) Die Erfindung betrifft eine Mineralisierungskartusche mit einem Anschlusselement zum Anschluss an einen Anschlusskopf eines Getränkebereiters, wobei die Mineralisierungskartusche weiter umfasst, einen Wassereinlass, einen Wasserauslass und eine Strömungskanalgeometrie, insbesondere eine Dosiervorrichtung, für die Aufteilung eines mit Mineralien anzureichernden Wasserstroms in einen Hauptstrompfad und in einen Dosierstrompfad. Diese Mineralisierungskartusche zeichnet sich dadurch aus, dass der Hauptstrompfad und der Dosierstrompfad verschiedene Abhängigkeiten von dem sie durchfließenden Volumenstrom und/oder dem darin vorherrschenden Druck in Bezug auf einen im Betrieb der Mineralisierungskartusche über die Dosiervorrichtung auftretenden Druckunterschied dP aufweisen.

Fig. 2

EP 4 389 271 A1

**Beschreibung**

Die Erfindung betrifft eine Mineralisierungskartusche nach Anspruch1.

Stand der Technik:

In DE 10 2020 106 940 A1 wird eine Mineralisierungskartusche zur Anreicherung von Trinkwasser mit Mineralien/Salzen vorgeschlagen. Zur Anreicherung des Trinkwassers wird in dieser Mineralisierungskartusche dem sie durchfließenden Trinkwasserstrom mittels einer Dosiervorrichtung eine Salzsole hinzudosiert.

Die Abgabe des derart angereicherten Trinkwassers geschieht mittels zum portionsweisen Bezug von Trinkwasser bereitgestellten Getränkebereitern. Eine solche Bezugsportion umfasst in üblicher Weise die Menge eines Trinkglases.

Derart mineralisierte Wässer werden beispielsweise nach körperlicher Anstrengung zum wieder anheben des physischen Mineralhaushaltes konsumiert. Je mehr Mineralien ausgeschwitzt wurden, desto mehr Mineralien sollten zur Wiederauffüllung der körpereigenen Speicher zu sich genommen werden.

Mit diesem Stand der Technik ist, für den durchschnittlichen. Anwender, ein weitgehender Ausgleich des physischen Mineralhaushaltes durch den Konsum einer entsprechenden Menge von mit Mineralien angereichertem Wassers möglich.

Andererseits sind die Geschmäcker von Personen unterschiedlich. Manche bevorzugen stark mineralisiertes Wasser, andere hingegen weniger stark mineralisiertes.

Um dennoch mit einem, mit einer solchen Mineralisierungskartusche ausgestatteten Getränkebereiter unterschiedliche Geschmäcker zufriedenzustellen, kann z.B. ein stärker mineralisiertes Wasser abgegeben werden, welchem anschließend zur Verdünnung / Anpassung an die bevorzugte Geschmacksnote weiteres Wasser beigemengt werden kann. Oder anstelle dessen kann auch ein Austausch der Mineralisierungskartusche auf eine mit einer anderen Konzentrationseinstellung für die Mineralisierung von Trinkwasser ausgebildete Mineralisierungskartusche vorgenommen werden.

**Aufgabe** der Erfindung ist es nun, einen Alternativvorschlag für die Konzentrationseinstellung des Mineralisierungsgrades von mit Mineralien angereichertem Trinkwasser zu unterbreiten.

Die **Lösung** der Aufgabe erfolgt durch die Merkmale des unabhängigen Anspruchs 1. In den abhängigen Ansprüchen sind vorteilhafte und zweckmäßige Weiterbildungen angegeben.

Dementsprechend betrifft die Erfindung eine **Mineralisierungskartusche** mit einem Anschlusselement zum Anschluss an einen Anschlusskopf oder ein Anschlusselement eines Getränkebereiters, wobei die Mineralisierungskartusche weiter umfasst, einen Wassereinlass, einen Wasserauslass und eine Strömungskanalgeometrie, insbesondere eine Dosiervorrichtung, für die Aufteilung eines mit Mineralien anzureichernden Wasserstroms in einen Hauptstrompfad und in einen Dosierstrompfad. Diese Mineralisierungskartusche zeichnet sich dadurch aus, dass der Hauptstrompfad und der Dosierstrompfad verschiedene Abhängigkeiten von dem sie durchfließenden Volumenstrom in Bezug auf einen im Betrieb der Mineralisierungskartusche über die Dosiervorrichtung auftretenden Druckunterschied dP aufweisen.

Damit kann abhängig vom Volumenstrom des durch die Mineralisierungskartusche fließenden Wasserstroms dessen Grad der Mineralisierung verändert/eingestellt werden.

Als Anschlusskopf wird eine Anschlussstruktur verstanden, die, vorzugsweise dauerhaft, an ein Leitungssystem angeschlossen ist/werden kann. Damit kann die Mineralisierungskartusche, die üblicher Weise ein Wechselelement ist, an das betreffende Leitungssystem angekoppelt werden.

Als Anschlusselement wird eine Struktur verstanden, die z.B. einen Anschluss der Mineralisierungskartusche an einen Wassertank, insbesondere in dessen Innerem, ermöglicht.

Der den Hauptstrompfad durchfließende Volumenstrom kann bevorzugt eine quadratische Auswirkung in Bezug auf den im Betrieb der Mineralisierungskartusche über die Dosiervorrichtung auftretenden Druckunterschied dP aufweisen und der den Dosierstrompfad durchfließenden Volumenstrom eine lineare Auswirkung.

D.h., bei einer Verdoppelung des Volumenstroms im Hauptstrompfad wird eine Vervierfachung des Volumenstroms im Dosierstrompfad (Mineralisierungsstrom) bewirkt, und damit die Mineralisierung verdoppelt.

Der den Hauptstrompfad durchfließende Volumenstrom kann in einer besonders bevorzugten Ausführungsform in Bezug auf den im Betrieb der Mineralisierungskartusche über die Dosiervorrichtung auftretenden Druckunterschied dP eine Strömungscharakteristik gemäß der Bernoulli-Gleichung aufweisen und der den Dosierstrompfad durchfließenden Volumenstrom eine laminare Strömungscharakteristik.

Strukturell kann der Hauptstrompfad eine Lochblende umfassen und der Dosierstrompfad eine Kapillare.

Die Dosiercharakteristik der Dosiervorrichtung kann einen unteren Schwellwert bei 0,3 bis 0,5 Liter pro Minute Durchsatzvolumen und/oder bei einem Differenzdruck dP von 0,02 bar aufweisen.

Die Dosiercharakteristik der Dosiervorrichtung kann des Weiteren einen oberen Schwellwert bei 3,0 bis 4,0 Liter pro Minute Durchsatzvolumen und/oder bei einem Differenzdruck dP von 2 bis 3 bar aufweisen.

Gemäß einer bevorzugten Ausführungsform kann die Dosiercharakteristik so ausgebildet sein, dass, zumindest bei einem Betrieb der Mineralisierungskartusche zwischen unterem und oberem Schwellwert, eine Verdoppelung des durch den Hauptstrompfad geführten Wasserstroms annähernd eine Verdoppelung des Dosierverhältnisses für den mit Mineralien anzureichernden Wasserstrom bewirkt .

Die Dosiervorrichtung kann eine Drossel umfassen, die aufweist: eine hülsenartige Struktur mit einer Einlassseite für den mit Mineralien anzureichernden Wasserstrom, eine Prallplatte und erste, den Wasserstrom des Hauptstrompfades entgegen seiner Einströmrichtung in die Drossel, weiterführende Strömungskanäle, insbesondere Drosselkanäle.

Die Dosiervorrichtung kann auch eine Drossel umfassen, die aufweist: eine hülsenartige Struktur mit einer Einlassseite für den mit Mineralien anzureichernden Wasserstrom, eine Prallplatte und erste, den Wasserstrom des Hauptstrompfades entlang seiner Einströmrichtung in die Drossel, weiterführende Strömungskanäle, wiederum insbesondere Drosselkanäle.

Die ersten weiterführenden Strömungskanäle oder Drosselkanäle der Drossel sind vorzugsweise gleichmäßig am betreffenden Umfang der hülsenartige Struktur verteilt angeordnet.

Die ersten weiterführenden Strömungskanäle oder Drosselkanäle der Drossel können so ausgebildet sein, dass sie den mit Mineralien anzureichernden Wasserstrom des Hauptstrompfades in eine Mischkammer leiten.

Die ersten weiterführenden Strömungskanäle oder Drosselkanäle der Drossel sind bevorzugt so ausgebildet, dass sie einen Drosselquerschnitt ausbilden, der im Bereich von 4 mm$^2$ bis 40 mm$^2$ liegt.

Die Drossel kann mindestens einen weiteren Strömungskanal oder Durchlass aufweisen, der so ausgebildet ist, dass dieser Strömungskanal oder Durchlass den mit Mineralien anzureichernden Wasserstrom des Dosierstromes über eine Salz- und/oder Sohlekammer zu einer in die Mischkammer führenden Kapillare leitet.

Die Kapillare kann so ausgebildet sein, dass sie eine Länge aufweist, die im Bereich von 3 mm bis 60 mm liegt und/oder einen Durchmesser aufweist, der im Bereich von 0,2 mm bis 0,5 mm liegt.

Diese Mineralisierungskartusche ist so ausgebildet, dass sie an einen **Getränkebereiter,** insbesondere einen Wasserspender, eine Getränkemaschine oder dgl., wie nachfolgend beschrieben, angeschlossen werden kann. Ein solcher Getränkebereiter kann umfassen, ein Gehäuse mit einem Anschlusskopf oder ein Anschlusselement für den Anschluss einer Mineralisierungskartusche und eine Wasserpumpe zur Erzeugung eines Wasserstroms. Dieser Getränkebereiter zeichnet sich dadurch aus, dass die Wasserpumpe so ausgebildet ist, dass der Druck und/oder das Durchsatzvolumen des mit der Wasserpumpe geförderten Wasserstroms einstellbar ist.

Das heißt, mit der Wasserpumpe kann variabel Einfluss auf Durchsatzvolumen und/oder Druck des mit ihr geförderten Wasserstromes genommen werden.

Als Anschlusskopf wird eine Anschlussstruktur verstanden, die, vorzugsweise dauerhaft, an ein Leitungssystem angeschlossen ist/werden kann. Damit kann die Mineralisierungskartusche, die üblicher Weise ein Wechselelement ist, an das betreffende Leitungssystem angekoppelt werden.

Als Anschlusselement wird eine Struktur verstanden, die z.B. einen Anschluss der Mineralisierungskartusche an einen Wassertank, insbesondere in dessen Innerem, ermöglicht.

Durch diese variable Einstellstellmöglichkeit des Durchsatzvolumens und/oder des Drucks des mit der Wasserpumpe geförderten Wasserstroms kann mit einer, an den Anschlusskopf des Getränkebereiters angeschlossenen und mit einer entsprechenden Strömungskanalgeometrie ausgestatteten Mineralisierungskartusche Einfluss auf den Grad der Mineralisierung des aufzumineralisierenden Wassers genommen werden. Dieser Grad der Mineralisierung des mit der Getränkemaschine zu beziehenden Wassers kann z. B. von schwach über mittel bis stark (auf)mineralisiert reichen.

Der mit der Wasserpumpe erzeugbare Druck des mit der Wasserpumpe geförderten Wasserstroms kann bevorzugt in einem Bereich zwischen 0,1 bar und 3,5 bar liegen.

Das mit Wasserpumpe erzeugbare Durchsatzvolumen des mit der Wasserpumpe geförderten Wasserstroms kann bevorzugt in einem Bereich zwischen 0,3 Liter pro Minute und 3,5 Liter pro Minute liegen.

Der Getränkebereiter kann auch eine Konzentrationseinstellvorrichtung aufweisen. Damit kann z.B. der gewünschte Grad der Mineralisierung des vom Getränkebereiter zu beziehen gewünschten Wassers eingestellt werden.

Diese Konzentrationseinstellvorrichtung kann eine Kontrolleinheit zur Einflussnahme auf den Druck und/oder das Durchsatzvolumen des mit der Wasserpumpe geförderten Wasserstroms umfassen.

Um den Mineralisierungsgrad des zu beziehen gewünschten Wassers auf eine bestimmte Ausführung einer Mineralisierungskartusche einstellen zu können, kann die Konzentrationseinstellvorrichtung eine Eingabeeinheit zur Eingabe von Parametern einer an den Anschlusskopf anzuschließenden Mineralisierungskartusche umfassen.

Diese Parameter der Mineralisierungskartusche können umfassen: Konzentrationsgrad und/oder Typ und/oder Mineralisierungsart der Mineralisierungskartusche und/oder Leitwert im aufmineralisierten Wasser und/oder Leitwert-Verhältnis von aufmineralisiertem Wasser und aufzumineralisierendem Wasser und/oder Angaben zum Druck und/oder Angaben zum Durchsatzvolumen des mit der Wasserpumpe zu fördernden Wasserstroms und/oder Querschnittsangaben bzgl. wenigstens eines Strömungspfades und/oder wenigstens einer Konzentrationskontrollvorrichtung der Mineralisierungskartusche und/oder Verhältnisangaben. Konzentrationsgrad: gewünschter oder vorgeschriebener, %-Angabe, -gering-mittel-hoch, -schwach-mittel-stark-, ....

Dies bewirkt, dass mit einer einzigen, entsprechend ausgebildeten, an den Anschlusskopf des Getränkebereiters angeschlossenen Mineralisierungskartusche mit einer volumenstromabhängigen Dosiercharakteristik der Mineralisierungsgrad des damit aufbereiteten Wassers, je nach Vorliebe und/oder Geschmacksempfinden des Beziehers des derart mineralisierten Wasser, eingestellt werden kann.

Dazu ist kein Austausch der Mineralisierungskartusche auf eine andere, mit geänderter Dosiergeometrie erforderlich. Auch nicht ein Vorhalten von zusätzlichem Trinkwasser für eine Verdünnung des mineralisierten Trinkwassers oder Reduzierung dessen Konzentrationsgrades.

Damit kann in benutzerfreundlicher Weise dem Wunsch entsprochen werden, mit einem einzigen Getränkebereiter, insbesondere Wasserspender, und einer einzigen Mineralisierungskartusche und ohne weitere Erfordernisse, je nach Vorliebe des Nutzers den Mineralisierungsgrad des zu beziehen gewünschten, mineralisierten Wassers einstellen zu können, von schwach mineralisiert bis stark mineralisiert.

Dies wird bewirkt, indem die Dosiercharakteristik der Mineralisierungskartusche so ausgelegt ist, dass eine stark volumenstromabhängige Dosierung des Salzkonzentrats zur Mineralisierung des Trinkwassers erfolgt. Der Getränkebereiter ist dabei so aufgebaut, dass er eine einstellbare Pumpe enthält, welche bei der Getränkeausgabe das unbehandelte Wasser durch die Mineralisierungskartusche drückt.

Durch die Wahl des Volumenstroms durch die Mineralisierungskartusche und/oder des an der Dosiervorrichtung abfallenden Differenzdrucks dP kann der Mineralisierungsgrad in einer bestimmten Bandbreite eingestellt werden.

Hierbei gilt, Erhöhung des Mineralisierungsgrades = Erhöhung des Leitwerts beim Durchströmen der Kartusche gegenüber dem unbehandelten Wasser.

Nachfolgend werden Beispiele für mögliche Mineralisierungsraten einer Ausführungsform einer Mineralisierungskartusche und eines Getränkebereiters mit eingesetzter Mineralisierungskartusche angegeben:

| Volumenstrom in L/min | Mineralisierung in $\mu$S/cm |
|---|---|
| 0,8 | 419 |
| 1 | 509 |
| 1,2 | 619 |
| 1,5 | 789 |

Hierzu seien folgende Konstruktionsmerkmale angegeben:

- Die Widerstandsstrecke des Hauptstroms ist eine Drossel, mit einem Querschnitt von beispielsweise 4 mm$^2$ bis 40 mm$^2$ (in einem bevorzugten Ausführungsbeispiel 10 mm$^2$),
- die Widerstandsstrecke des Dosierstroms ist eine Kapillare, mit 0,2 mm bis 0,5 mm Innendurchmesser und 10 mm bis 30 mm Länge (in einem bevorzugten Ausführungsbeispiel 0,3 mm Innendurchmesser und 15 mm Länge).

Für die Wasserpumpe sei ein bevorzugter Förderbereich von 0,5 Liter / Minute bis 3,5 Liter / Minute angegeben. Der tatsächliche Förderbereich der Wasserpumpe ist jedoch größer als dieser bevorzugte.

Der Getränkebereiter kann auch Sensorelemente, wie Leitwertsonden zur Vermessung des Rohwassers und/oder des aufmineralisierten Wassers und/oder Flowmeter zur Konzentrationseinstellung an Mineralien aufweisen.

Der Getränkebereiter kann auch ein Kommunikationssystem zur Kommunikation mit der Mineralisierungskartusche aufweisen, insbesondere ein Kommunikationssystem zur drahtlosen und/oder berührungsfreien Kommunikation zwischen einem Kommunikationselement im Getränkebereiter und einem Kommunikationselement in der Mineralisierungskartusche. Das Kommunikationselement in der Mineralisierungskartusche kann einen kartuschenspezifischen Datenspeicher aufweisen, der über das Kommunikationselement des Getränkebereiters ausgelesen und/oder beschrieben werden kann.

Dabei kann auch eine drahtlose Energieübertragung zwischen wenigstens zwei Kommunikationselementen vorgesehen sein.

Physikalischer Hintergrund:

Bernoulli Ansatz für Drossel durch Lochblenden:

Im Prinzip herrscht vor den Drosselkanälen die Geschwindigkeit Null und nur ein statischer Druck P1 welcher vor der Drossel herrscht und auch über ein großes Rohr praktisch verlustfrei auch in der Salzkammer vor der Kapillare herrscht.

Wenn Wasser durch die Dosiervorrichtung strömt, so wird durch die Drosselöffnungen der Dosiervorrichtung der Hauptstrom des Wassers beschleunigt und der Druck in der Mischkammer P2 ist geringer als P1, aufgrund der Beschleunigung des Wassers durch die Drossel der Dosiervorrichtung.

Hierbei gilt:

$$dP = P1-P2$$

Benoulli:

$$dp = \tfrac{1}{2}\ \rho\ v^2$$

(Wobei v = mittlere Geschwindigkeit in Drosselquerschnitt A) Vh/A = v (Vh = Hauptvolumenstrom)

| Physikalische Kennzahl | |
|---|---|
| Name | Reynolds-Zahl |
| Formelzeichen | $Re$ |
| Dimension | 1 |
| Definition | $Re = \dfrac{\rho \cdot v \cdot d}{\eta}$ |

| | |
|---|---|
| $\rho$ | Dichte |
| $v$ | Strömungsgeschwindigkeit |
| $d$ | charakteristische Länge |
| $\eta$ | dynamische Viskosität |

| Benannt nach | Osborne Reynolds |
|---|---|
| Anwendungsbereich | viskose Strömungen |

Mit (entnommen aus WIKIPEDIA).

Damit gilt:

$$\tfrac{1}{2}\rho Vh^2 / A^2 = dp$$

Weiterhin gilt für laminare Rohrströmung (Kapillare)

Vd = Dosierstrom
R = Radius der Kapillare
l = Länge der Kapillare

$$Vd = dp * R4 * \pi / (8 * \eta * l)$$

Man kann nun leicht erkennen: wenn man Vh verdoppelt so vervierfacht sich dp und damit auch Vd.

Da die Dosierung aus dem Verhältnis Vd/Vh gebildet wird ergibt sich in Summe:

4Vd/2Vh und damit 2Vd/Vh - also jede Verdoppelung des Hauptstroms bringt auch eine Verdoppelung des Dosierverhältnisses.

Basisdimensionierung:

Drosselquerschnitt 4 bis 40 mm$^2$
Kapillare: Länge 3 mm bis 60 mm
Durchmesser 0,2 mm bis 0,5 mm

Hinweis: Differenzdruck dp aus Drosselung des Hauptstroms muss für Dosierung bzw. Inbetriebnahme grösser $\rho$gh sein, wobei h = Salzkammerhöhe. Sonst lässt sich Salzkammer nicht sicher füllen.

Beschreibung eines Ausführungsbeispiels:

Nachfolgend wird die Erfindung unter Bezugnahme auf die beigefügten Figuren näher beschrieben.
Es zeigen beispielhaft und schematisch:

Fig. 1:      einen Getränkebereiter mit Mineralisierungskartusche,

Fig. 2:      eine Mineralisierungskartusche, angeschlossen an einen Anschlusskopf eines Getränkebereiters, in Schnittdarstellung,

Fig. 3:      eine Grafik mit einem Koordinatensystem zur Leitfähigkeit in "$\mu$S / cm" bezogen auf den Volumenstrom in "Liter / Minute",

Fig. 4:      eine perspektivische Ansicht auf eine aufgeschnitten dargestellte Mineralisierungskartusche und einen Anschlusskopf eines Getränkebereiters gem. der Fig. 2,

Fig. 5:      eine weitere Darstellung wie in Figur 4, jedoch mit Darstellung von Pfeilen zur Symbolisierung der des Zu- und Hauptstroms in der Mineralisierungskartusche,

Fig. 6:      die Mineralisierungskartusche nach Fig. 2, in Querschnittsdarstellung entsprechend des Schnittes "A".

Fig. 7-9:    eine alternative Ausführungsform einer Mineralisierungskartusche.

Fig. 10:     eine weitere Ausführungsform mit einem Wassertank und einer darin eingesetzten Mineralisierungskartusche.

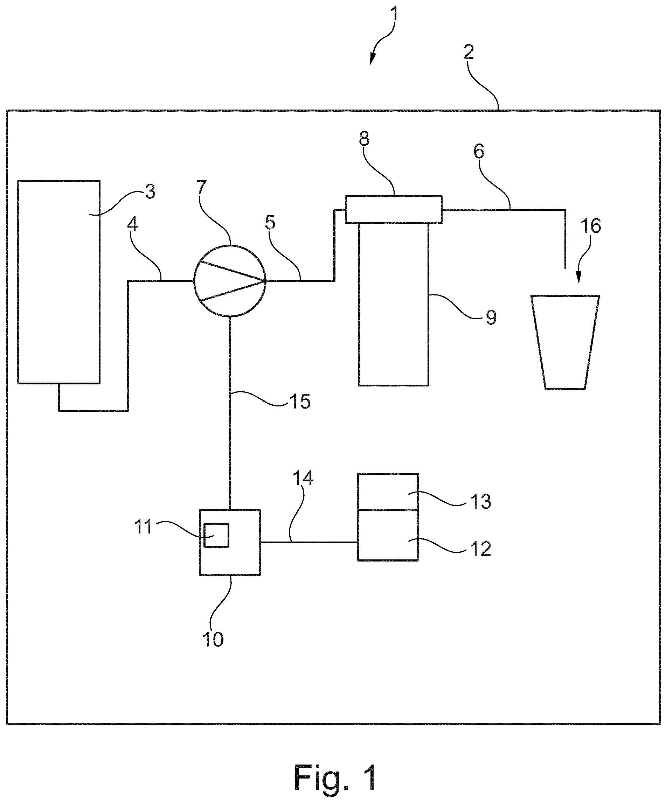

Dementsprechend zeigt die **Figur 1,** beispielhaft und schematisch, einen Getränkebereiter 1, mit einem Gehäuse 2, einem Wassertank 3, Wasserleitungen 4, 5 und 6, sowie einer Wasserpumpe 7, einem Anschlusskopf 8, einer an den Anschlusskopf 8 angeschlossenen Mineralisierungskartusche 9, einer Konzentrationseinstellvorrichtung 10, einer Kontrolleinheit 11 zur Einflussnahme auf den Druck und/oder das Durchsatzvolumen des mit der Wasserpumpe 7 geförderten Wasserstroms, einer Eingabeeinheit 12 zur Eingabe wenigstens eines Parameters, einer Anzeigeeinheit 13 und Verbindungsleitungen 14, 15, und einem Glas 16 zur Aufnahme von aufmineralisiertem Waser.

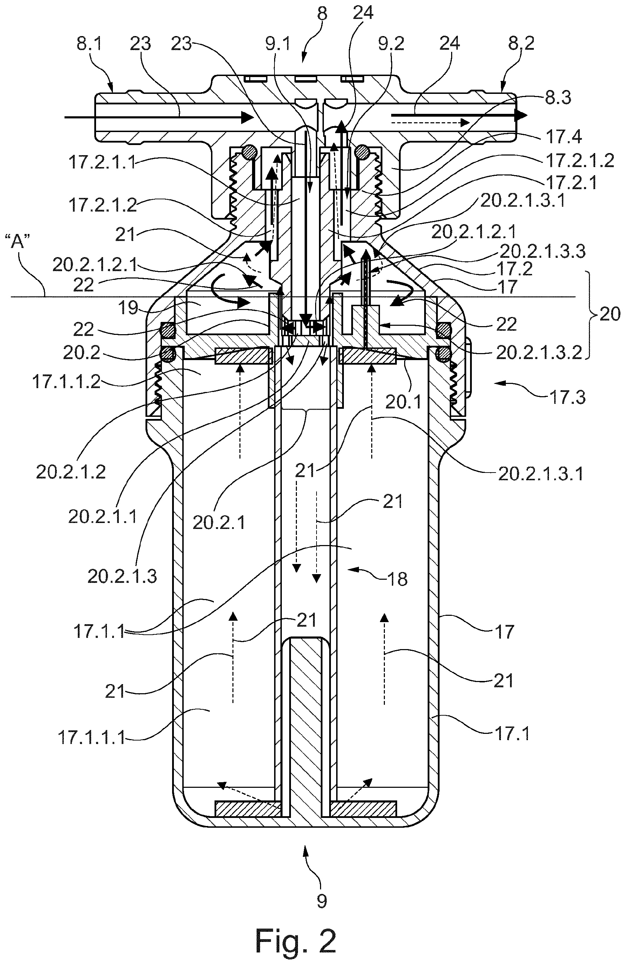

Die **Figur 2** zeigt in Schnittdarstellung eine Mineralisierungskartusche 9, angeschlossen an einen Anschlusskopf 8 eines Getränkebereiters 1.
Deren betriebsgemäße Ausrichtung ist, wie in der Figur 2 dargestellt, mit dem Anschlusskopf 8 oben und der Mineralisierungskartusche 9 unten.
Der Anschlusskopf 8 umfasst einen Wassereinlass 8.1 und einen Wasserauslass 8.2 für durch die Mineralisierungskartusche 9 aufzumineralisierendes Wasser und einen anschlusskopfseitigen Anschluss 8.3 für den Anschluss eines kartuschenseitigen Anschlusselementes 17.4 der Mineralisierungskartusche 9.
Die Mineralisierungskartusche 9 umfasst ein Gehäuse 17 mit einem unteren Gehäuseteil 17.1 und einem oberen Gehäuseteil 17.2. Letztere sind an einer Verbindungsstelle 17.3 miteinander verbunden, vorzugsweise lösbar, hier beispielhaft mittels einer Schraubverbindung dargestellt.
Im unteren Gehäuseteil 17.1 ist eine Salzkammer 17.1.1 ausgebildet, die mit Salz gefüllt ist. Zentral in dieser Salzkammer ist ein diese nach innen hin begrenzendes Rohr 18 angeordnet. Durch dieses Rohr 18 wird aufzumineralisierndes Wasser in den Bodenbereich der Salzkammer eingeleitet.
Im Betrieb der Mineralisierungskartusche 9 befindet sich im Inneren der so gebildeten Salzkammer 17.1.1 in deren unteren Bereich 17.1.1.1 das zur Aufmineralisierung des Wassers bereitgesellte Salz, und im oberen Bereich 17.1.1.2 der Salzkammer eine Salzlösung, insbesondere eine vollständig gesättigte Salzlösung. Diese Salzlösung entsteht durch das während des Betriebs der Mineralisierungskartusche 9 durch das Rohr 18 zugeführte und durch das Salz hindurchströmende Wasser.
Im oberen Gehäuseteil 17.2 ist in axialer Ausrichtung zentral ein hülsen- oder rohrartiges Wasserführungselement 17.2.1 angeordnet. Dieses Wasserführungselement umfasst zentral im Inneren einen Zulaufkanal 17.2.1.1 für die Zuführung des aufzumineralisierenden Wassers.

Zur Ausleitung des aufmineraliseiten Wassers aus der Mineralisierungskartusche 9 ist zwischen dem hülsen- oder rohrartigen Wasserführungselement 17.2.1 und einer Wandung des dieses umgebenden, kartuschenseitigen Anschlusselementes 17.4 mindestens ein Auslaufkanal 17.2.1.2 ausgebildet. Dieser mindestens eine Auslaufkanal 17.2.1.2 führt zum Wasserauslass 8.2 des Anschlusskopfs 8.

Weiterhin ist im oberen Gehäuseteil 17.2, stromabwärts des hülsen- oder rohrartigen Wasserführungselementes 17.2.1 und stromaufwärts des mindestens einen Auslaufkanals 17.2.1.2, eine Mischkammer 19 ausgebildet. Diese Mischkammer 19 wird gegenüber der im unteren Gehäuseteil 17.1 ausgebildeten Salzkammer 17.1.1 durch eine Trennwand 20.1 einer Dosiervorrichtung 20 abgetrennt.

Diese Dosiervorrichtung 20 umfasst weiterhin eine Hülse 20.2, in der das hülsen- oder rohrartigen Wasserführungselement 17.2.1 mündet. Im dargestellten Ausführungsbeispiel steckt das Ende des Wasserführungselementes 17.2.1 ein Stück weit in der Hülse 20.2.

Zwischen der Hülse 20.2 und dem Wasserführungselement 17.2.1 ist zumindest ein Drosselkanal 20.2.1.2 einer Drossel 20.2.1 für den Hauptstrom 20.2.1.2.1 des aufzumineralisierenden Wassers ausgebildet. Vorzugsweise sind mehrere Drosselkanäle 20.2.1.2 um die zentrale Achse der Hülse 20.2 und des

Wasserführungselementes 17.2.1 verteilt ausgebildet. Dadurch kann eine gleichmäßigere Strömung in die Mischkammer hinein und in dieser bewirkt werden. Dies hat wiederum eine gute Vermischung des Hauptstroms des aufzumineralisierenden Wassers mit einem die Salzlösung zuführenden Dosierstrom zur Folge.

Die Drossel 20.2.1 umfasst des Weiteren eine Prallplatte 20.2.1.1 zum Stoppen der Fließrichtung zumindest des überwiegenden Teils des durch das Wasserführungselement 17.2.1 zufließenden Wasserstromes. Der zumindest eine Drosselkanal 20.2.1.2 der Drossel 20.2.1 bewirkt eine Umkehrung der Strömungsrichtung für den Hauptstrom 20.2.1.2.1 gegen die bisherige Strömungsrichtung des aufzumineralisierenden Wassers. Dieser Sachverhalt ist durch die in der Hülse 20.2, oberhalb der Prallplatte 20.2.1.1 quer zu letzterer und anschließend zwischen Hülse 20.2 und Wasserführungselement 17.2.1 in Richtung nach oben zeigenden Pfeile 22 zur Symbolisierung des Wasserflusses des Hauptstroms 20.2.1.2.1 dargestellt.

Dadurch kann ein bestimmter Druck P1 an dieser Stelle in der Drossel 20.2.1 und damit in der Mineralisierungskartusche 9 definiert werden. Dieser Druck P1 hängt von weiteren Parametern ab, wie z.B. dem Querschnitt des mindestens einen Drosselkanals 20.2.1.2.

In der Prallplatte 20.2.1.1 ist in der beispielhaft dargestellten Ausführungsform mindestens auch ein Durchlass 20.2.1.3 nach unten, als Einlass in das Rohr 18, ausgebildet.

Durch diesen Durchlass 20.2.1.3 kann der in den Hauptstrom 20.2.1.2.1 einzudosierende Dosierstrom 20.2.1.3.1 aus dem durch das Wasserführungselement 17.2.1 zufließenden Wasserstrom gespeist werden. Dazu fließt dieser Teil des aufzumineralisierenden Wassers über das Rohr 18 in den unteren Bereich 17.1.1.1 der Salzkammer 17.1.1 und durch das darin zur Aufmineralisierung des Wassers vorgehaltene Salz wieder nach oben, entsprechend der Richtung der einen Wasser- und Salzlösungsfluss symbolisierenden Pfeile 21.

Im oberen Bereich 17.1.1.2 der Salzkammer 17.1.1 befindet sich die durch das Wasser beim Aufsteigen durch das Salz aus diesem gebildete Salzlösung. Aufgrund des vergleichsweise geringen Volumens des Dosierstroms 20.2.1.3.1 im Vergleich zum Hauptstrom 20.2.1.2.1 fließt das Wasser nur sehr langsam durch die vergleichsweise großvolumige Salzkammer 17.1.1. D.h., es ist ausreichend viel Zeit für eine vollständige Reaktion zwischen Wasser und Salz.

Für die Bestimmung des Dosierverhaltens der Dosiervorrichtung 20 kann daher die Fließstrecke durch die Salzkammer 17.1.1 näherungsweise als statisch, d.h., ohne strömungsbedingten Druckabfall betrachtet werden. Entsprechend des Lösungsverhaltens des Salzes ist die so gebildete Salzlösung üblicher Weise gesättigt.

Um diese Salzlösung aus der Salzkammer 17.1.1 zur Anreicherung des Hauptstroms 20.2.1.2.1 in die Mischkammer 19 entweichen lassen zu können, ist in der Trennwand 20.1 der Dosiervorrichtung 20 ein Auslass 20.2.1.3.2 aus der Salzkammer 17.1.1 ausgebildet.

Zur weiteren Einflussnahme auf die Steuerung des Dosierverhältnisses umfasst dieser Auslass 20.2.1.3.2 aus der Salzkammer eine Kapillare 20.2.1.3.3. Querschnitt und Länge der Kapillare 20.2.1.3.3 sind auf den wirksamen Querschnitt des mindestens einen Drosselkanals 20.2.1.2 und die Viskosität der Salzlösung abgestimmt.

Ein Weiterer Aspekt zur Steuerung der Aufmineralisierung ist der Druckunterschied dP, zwischen dem in der Drossel am Eingang des mindestens einen Drosselkanals 20.2.1.2 herrschenden Druck P1 und dem am Ausgang der Kapillare 20.2.1.3.3 in der Mischkammer 19 vorherrschenden Druck P2.

Da der am Eingang der Kapillare 20.2.1.3.3 in der Salzkammer 17.1.1 vorherrschende Druck P1, aufgrund des vergleichsweise sehr geringen Volumenstroms des Dosierstroms 20.2.1.3.1, dem in der Drossel 20.2.1 am Eingang des mindestens einen Drosselkanals 20.2.1.2 herrschende Druck P1 gleich ist, zumindest näherungsweise (s.o. statisch), definieren somit im Wesentlichen Querschnitts- und Längenverhältnisse der Drossel 20.2.1 und der Kapillare 20.2.1.3.3 sowie die Viskosität der Salzlösung das Dosierverhältnis und damit die Aufmineralisierung entsprechend des der Mineralisierungskartusche 9 zugeführten Volumenstroms an aufzumineralisierendem Wasser und/oder des darin vorherrschenden Drucks.

Die Liniendicke der Pfeile 21 und 22 zeigen symbolisch das Mengenverhältnis von Hauptstrom 20.2.1.2.1 und Dosierstrom 20.2.1.3.1 zur Aufmineralisierung des Wassers bei einem bestimmten zugeführten Volumenstrom an aufzumineralisierendem Wasser und/oder bei einem bestimmten darin vorherrschenden Druck:
Um eine Anpassung oder Änderung der Aufmineralisierung bewirken zu können, ist die Dosiervorrichtung 20 so ausgebildet, dass sie eine von dem über der Dosiervorrichtung vorherrschenden Differenzdruck abhängige und/oder vom Durchsatzvolumen des durch die Mineralisierungskartusche fließenden Wasserstroms volumenstromabhängige Dosiercharakteristik aufweist.

D.h., je niedriger Differenzdruck und/oder Durchsatzvolumen des durch die Mineralisierungskartusche fließenden Wasserstroms, desto niedriger ist das Zudosierverhältnis des Dosierstroms 20.2.1.3.1 in den Hauptstrom 20.2.1.2.1 und damit die Aufmineralisierung des aufzumineralisierenden Wassers, und umgekehrt.

Dieses differenzdruckabhängige und/oder volumenstromabhängige Zudosierverhalten funktioniert am stabilsten in einem Bereich zwischen einem unteren und einem oberen Schwellwert für den Volumenstrom und/oder den Differenzdruck im System.

Der untere Schwellwert wird in erster Linie durch die Viskosität der Salzlösung und dem Querschnitt der Kapillare 20.2.1.3.3 bestimmt. Es können sich aber auch Lufteinschlüsse störend auswirken. So können z. B. in der Salzkammer eingeschlossene Luftbläschen bei einem niedrigen Kapillarquerschnitt und einem geringen Volumenstrom und/oder Differenzdruck im System den Fluss der Salzlösung in der Kapillare stören oder gar blockieren. Solch eine Störung tritt jedoch i.d.R. nur bei der Inbetriebnahme der Mineralisierungskartusche 9 auf und kann üblicher Weise durch vorübergehende Erhöhung von Volumenstrom und/oder Druck im System behoben werden.

Der obere Schwellwert wird unter anderem durch die Konstruktion und die damit einhergehenden Anforderungen des Systems an dessen Druckstabilität bestimmt. So werden Tischgeräte üblicher Weise bis zu einem oberen Druck von 3 bar bis 3,5 bar betrieben. Ein darüber hinausgehender Schwellwert ist grundsätzlich möglich, macht aber nur dann Sinn, wenn das gesamte System dafür ausgelegt ist.

Bezüglich des Volumenstroms ist der obere Schwellwert ebenfalls anwendungsabhängig und liegt üblicher Weise bei ca. 3,0 Liter / Minute bis 3,5 Liter / Minute.

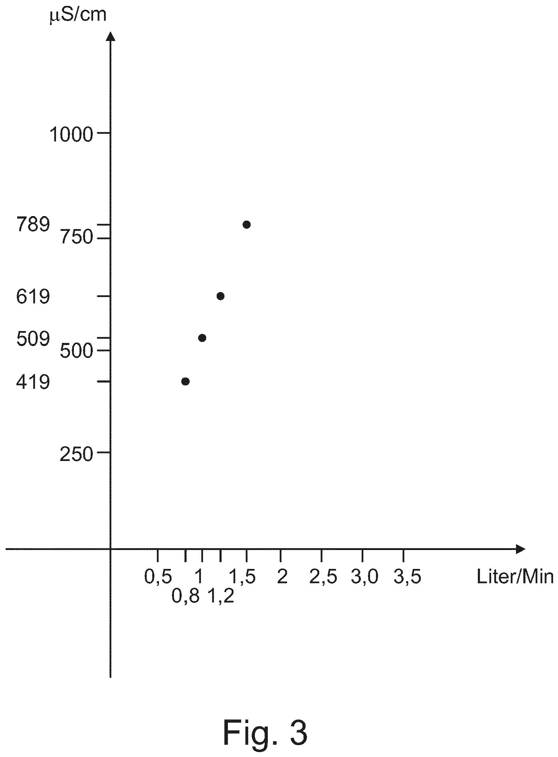

Zur Visualisierung dieses Sachverhalts zeigt die **Figur 3** eine Grafik mit einem Koordinatensystem zur Leitfähigkeit in "µS / cm" bezogen auf den Volumenstrom in "Liter / Minute". Dargestellt sind darin die Werte aus der oben angegebenen Tabelle.

Abgesehen vom unteren Schwellwert unter 0,8 Liter / Minute der aufgrund der Grenzwertsproblematik beim Anspringen des Systems nicht genau in die Kennlinie der Grafik passt, ist für die übrigen vier Werte recht gut der lineare Zusammenhang zwischen Mineralisierung und Volumenstrom ersichtlich.

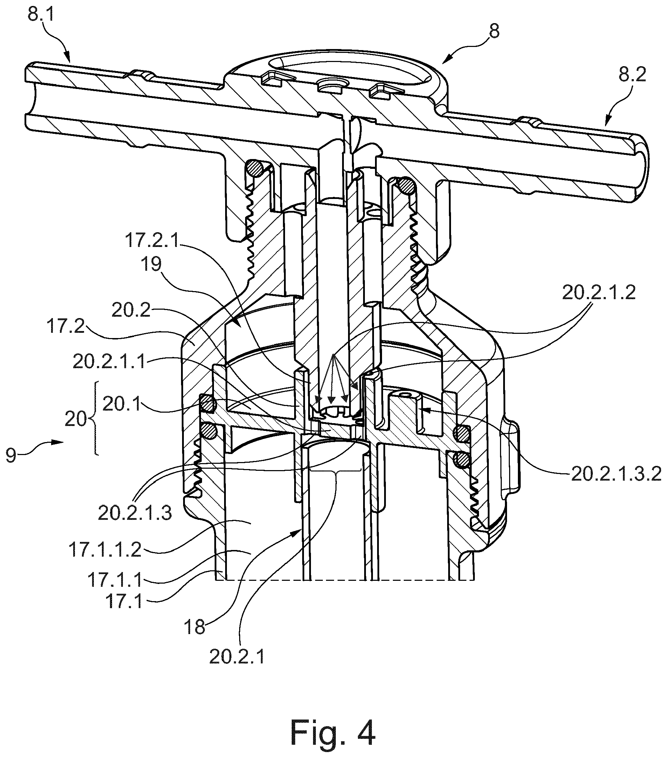

Die **Figur 4** zeigt eine perspektivische Ansicht auf eine aufgeschnitten dargestellte Mineralisierungskartusche 9 und einen Anschlusskopf 8 gem. der Fig. 2, jedoch zur besseren Übersicht ohne Pfeile zur Darstellung des Haupt- und Dosierstroms.

Zentral ist darin die Dosiervorrichtung 20 dargestellt, mit Prallplatte 20.2.1.1, mehreren von dieser nach oben führenden, die Strömungsrichtung des Hauptstroms gegenüber der Zuflussrichtung des aufzumineralisiernden Wasserstoms umkehrenden Drosselkanälen 20.2.1.2 und mindestens einem Durchlass 20.2.1.3 durch die Prallplatte nach unten in die Salzkammer (vgl. Fig. 2/ Pfeile 21, 22).

Die Drosselkanäle 20.2.1.2 sind zwischen der Hülse 20.2 der Dosiervorrichtung 20 und dem Wasserführungselement 17.2.1 ausgebildet und münden in der Mischkammer 19. Ebenso in der Mischkammer 19 mündet der Auslass 20.2.1.3.2 aus der Salzkammer 17.1.1. In der Mischkammer 19 wird im Betrieb der Mineralisierungskartusche 9 das aufzumineralisierende Wasser des Hauptstroms mit der aus dem Auslass 20.2.1.3.2 aus der Salzkammer zudosierten Salzlösung vermischt, entsprechend des durch die Einstellung des im aufzumineraliserenden Wasserstrom vorherrschenden Drucks und/oder dessen Volumenstroms (s. oben zur Einstellung des Dosierverhältnisses).

Die Kapillare 20.2.1.3.3 ist in dieser Darstellung nicht gezeigt, da der Schnitt durch die Mineralisierungskartusche 9 etwas vor der Stelle liegt, an welcher die Kapillare 20.2.1.3.3 in der Figur 2 aus dem Auslass 20.2.1.3.2 der Salzkammer weiter in die Mischkammer 19 führt. Dennoch ist die Mündung des Auslasses 20.2.1.3.2 der Salzkammer für die Zufuhr der Salzlösung in die Mischkammer 19 gut erkennbar.

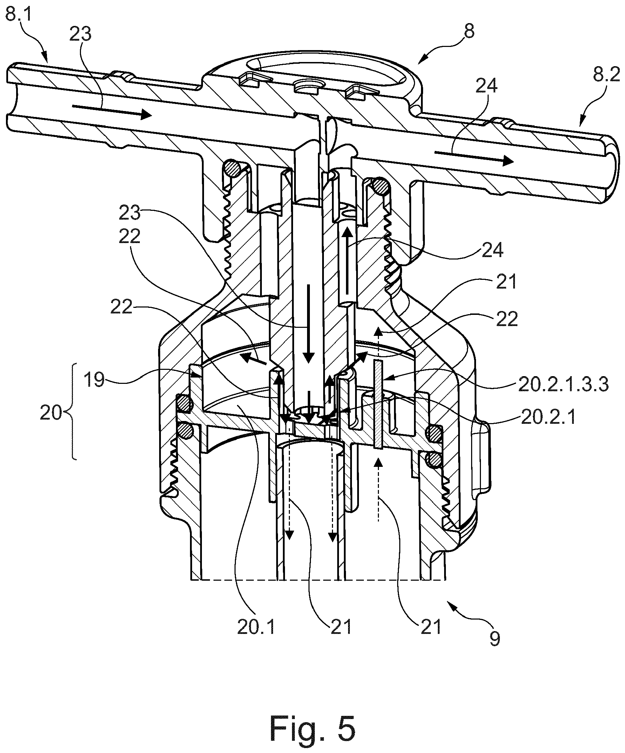

Die **Figur 5** zeigt eine weitere Darstellung wie in Figur 4, jedoch mit Darstellung von Pfeilen 21 bis 24 zur besseren Visualisierung des Zustroms 23, Hauptstroms 22, Dosierstroms 21 und Abstroms 24, also des aufmineralisierten Wasserstroms 24, in der Mineralisierungskartusche 9.

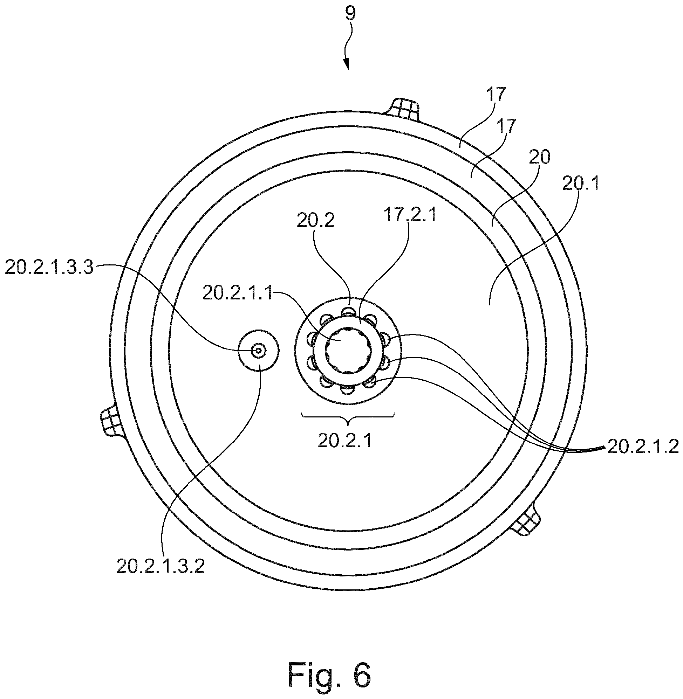

Die **Figur 6** zeigt eine Querschnittsdarstellung der Mineralisierungskartusche 9, entsprechend des Schnittes A in Fig. 2.

Radial außen ist die Außenseite des Gehäuses 17 dargestellt. Im Anschluss daran, radial einwärts betrachtet, die Schnittfläche der Wand des Gehäuses 17 der Mineralisierungskartusche 19 und innerhalb derer eine Dosiervorrichtung 20 für die Aufteilung eines mit Mineralien (Salz) anzureichernden Wasserstroms auf einen Hauptstrompfad und einen Dosierstrompfad (vgl. Fig. 2/Pfeile 21, 22).

Die Drosselkanäle 20.2.1.2 der Drossel 20.2.1 sind in der hülsenartigen Struktur 20.2 rund um deren Innenwandung verlaufend ausgebildet und durch die Außenwandung des Wasserführungselementes 17.2.1 begrenzt. Im vorliegenden Ausführungsbeispiel sind beispielhaft 10 Drosselkanäle 20.2.1.2 dargestellt, die jeweils einen Querschnitt von 1,0 mm$^2$ aufweisen. Die hierzu vorgesehene Kapillare 20.2.1.3.3 weist ebenfalls beispielhaft einen Durchmesser von 0,3 mm auf.

Zentral im Inneren des Wasserführungselementes 17.2.1 ist die den aufzumineralisiernden Wasserstrom in seiner in die Mineralisierungskartusche 9 einströmenden Fließrichtung stoppende Prallplatte 20.2.1.1 zu sehen (vergleiche Figuren 2 und 4).

Auch in dieser Darstellung sind aus Gründen der Übersichtlichkeit die Strömungsdarstellungen gezeigt.

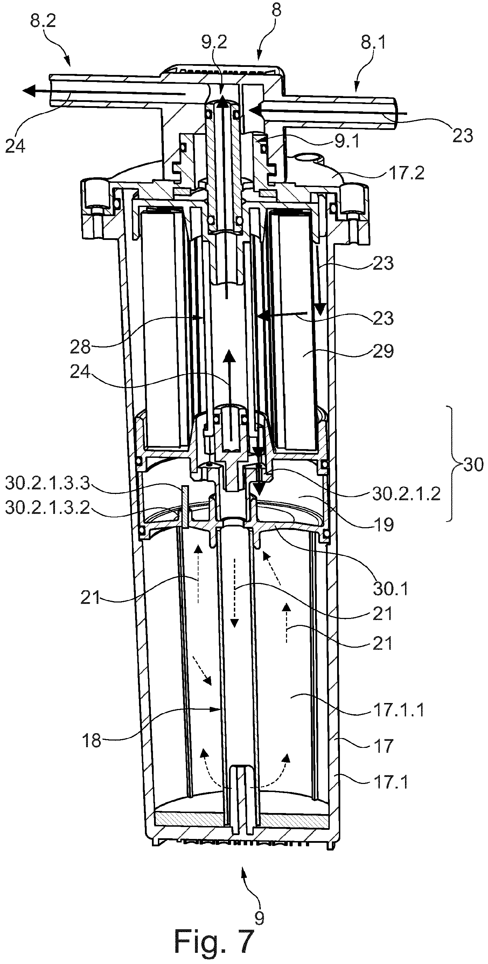

Die **Figuren 7-9** zeigen eine alternative Ausführungsform einer an einen Anschlusskopf 8 angeschlossenen Mineralisierungskartusche 9. Auch hier gilt für die betriebsgemäße Ausrichtung, dass diese der in der Darstellung gezeigten Anordnung mit Anschlusskopf 8 oben und Mineralisierungskartuschen 9 unten entspricht.

Gleiche Bezugszeichen bezeichnen im Weiteren die gleichen Merkmale wie in den vorangehend beschriebenen Ausführungsformen.

Im Unterschied zu den davor beschriebenen Ausführungsformen ist hier eine Mineralisierungskartusche 9 mit einer alternativ ausgebildeten Dosiervorrichtung 30 gezeigt. Zur Unterscheidung der einzelnen Detailmerkmale der Dosiervorrichtung 30 sind alle ihre betreffenden Bezugszeichennummern gegenüber den vorangehenden Ausführungsformen, die im Nummernkreis 20 liegen, hier um den Nummernkreis 10 erhöht.

Die **Figur 7** zeigt hierzu eine Überblicksdarstellung. Zusätzlich ist hier ein Filter 29 im Zulaufbereich des aufzumineralisierenden Wasserstroms gezeigt. Dieser kann ein Kohlefilter, ein Membranfilter und/oder dgl. mehr sein.

Als weiterer Unterschied verläuft der Zustrom im Inneren der Mineralisierungskartusche 9 gem. Pfeil 23 zuerst radial außerhalb des Filters 29 in den oberen Teil des Gehäuses 17 und von dort aus im Querstrom radial einwärts durch den Filter 29 bis zur Wandung eines Abstromrohres 28 und danach in die Dosiervorrichtung 30.

In der Dosiervorrichtung 30 wird der Zustrom gem. Pfeil 23, wie in der bereits beschriebenen Ausführungsform der Dosiervorrichtung 20, in einen Hauptstrom und einen Dosierstrom aufgeteilt.

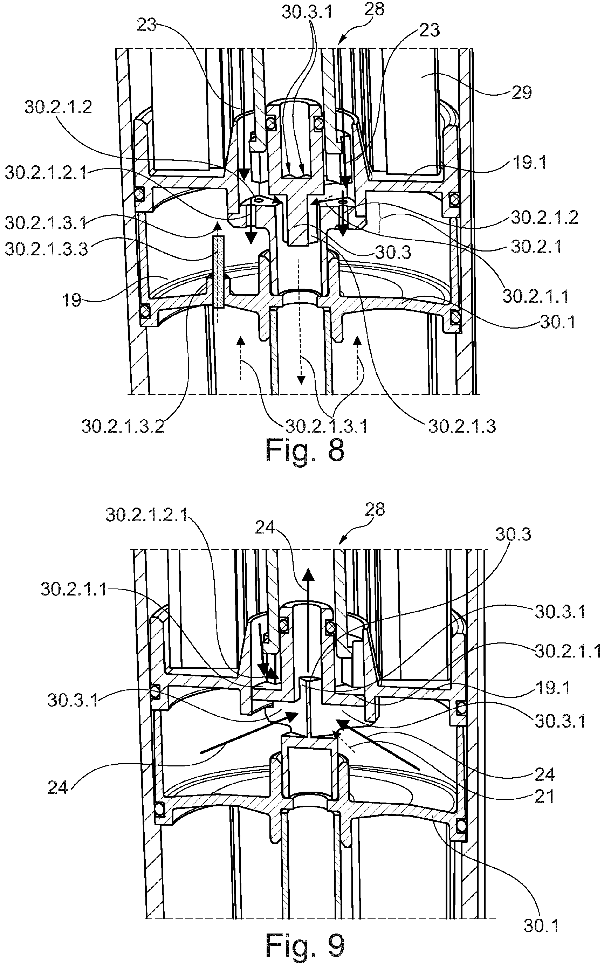

Zur besseren Verdeutlichung wird dieser Sachverhalt nachfolgend unter Bezugnahme auf die vergrößerten Darstellungen in den beiden **Figuren 8 und 9** weiter beschrieben.

Die **Figur 8** zeigt den Bereich der Mineralisierungskartusche 9 in Schnittdarstellung, an welchem die Dosiervorrichtung 30 und die Mischkammer 19 angeordnet sind.

Diese Dosiervorrichtung 30 weist ebenfalls eine Prallplatte 30.2.1.1 auf, an der der über den Filter 29 zufließende Zustrom gem. Pfeil 23 grundsätzlich gestoppt wird. Im Unterschied zur ersten offenbarten Ausführungsform einer Dosiervorrichtung 20 mit Strömungsumkehr, ist diese Dosiervorrichtung 30 jedoch so ausgebildet, dass mindestens ein Drosselkanal 30.2.1.2, bevorzugt mehrere Drosselkanäle 30.2.1.2 einer Drossel 30.2.1, den Teil des Zustroms 23, der von hier ausgehend den Hauptstrom 30.2.1.2.1 ausbildet, in der Einströmrichtung weiter nach unten, von oben her in die Mischkammer 19 leiten.

Im Weiteren weist diese Ausführungsform einer Dosiervorrichtung 30 ein Kreuzstromelement 30.3 auf. Dieses ist axial und zentral zur Prallplatte 30.2.1.1 in der Dosiervorrichtung 30 angeordnet und weist mindestens einen Durchlass 30.2.1.3, entsprechend der Funktion in der ersten Ausführungsform einer Dosiervorrichtung 20, auf. D.h., durch diese wird der Teil des Zustroms gem. Pfeils 23, der ab hier den Dosierstrom ausbildet, nach unten in RichtungSalzkammer geleitet, durch diese hindurch und über den Auslass 30.2.1.3.2 der Salzkammer 17.1.1 und die daran angeordnete Kapillare 30.2.1.3.3 schließlich ebenfalls in die Mischkammer.

Auch hier wird entsprechend des Druckunterschieds dP über die der Dosiervorrichtung 30, insbesondere deren Drossel 30.2. der Grad der Mineralisierung des aufzumineralisiernden Wassers in Abhängigkeit des Volumenstroms und/oder des in diesem vorherrschenden Drucks realisiert.

Zur Ausleitung des in der Mischkammer 19 mit Salzlösung angereicherten Wassers in der Form des Abstroms gemäß des Pfeiles 24 in ein Abstromrohr 28 weist das Kreuzstromelement 30 mindestens einen Kreuzkanal 30.3.1, bevorzugt mehrere Kreuzkanäle 30.3.1 auf (s. **Figur 9**).

Zum Verständnis: Die Darstellung der **Figur 9** ist gegenüber der Darstellung der Figur 8 um 90° in Bezug auf deren Längsachsen (aus Übersichtlichkeitsgründen nicht dargestellt) gedreht.

Somit offenbart die Figur 8 die für den Zustrom und dessen Aufteilung in Hauptstrom und Dosierstrom relevanten Merkmale und die Figur 9 die für den Abstrom aus der Mischkammer relevanten Merkmale.

Zur Abtrennung gegenüber dem darüber, stromaufwärts liegenden Zulaufbereich der Mineralisierungskartusche 9, mit dem Filter 29, weist diese Ausführungsform der Mischkammer 19 zusätzlich eine Trennwand 30.1 auf.

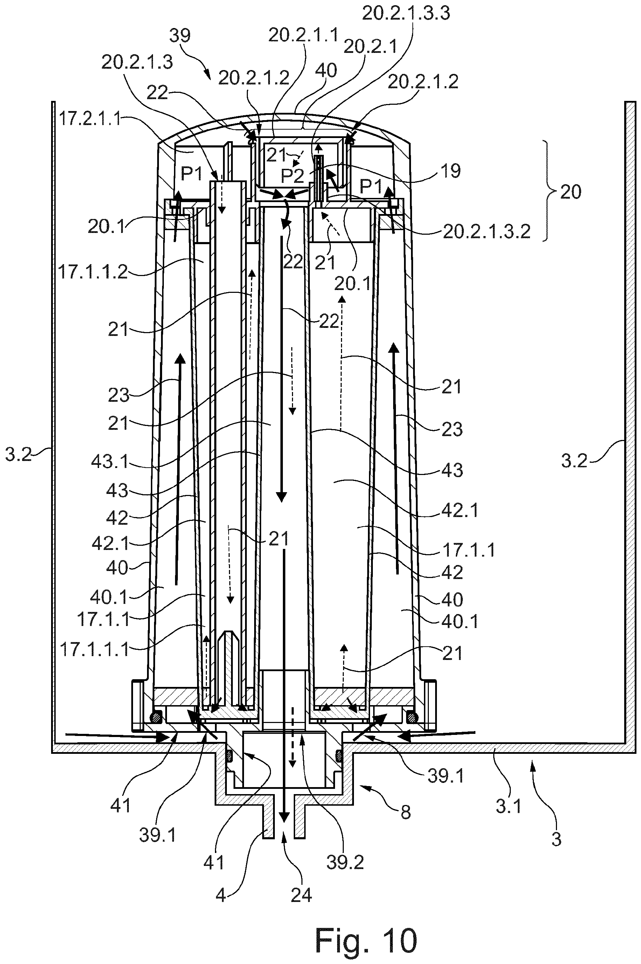

Die **Figur 10** zeigt in Schnittdarstellung beispielhaft und schematisch eine weitere Ausführungsform der Aufmineralisierung, in diesem Fall mit einem Wassertank 3 und einer darin eingesetzten Mineralisierungskartusche 39. Der Wassertank 3 umfasst einen Tankboden 3.1, Tankwände 3.2 und ein tankseitiges Anschlusselement 8 zum Anschluss eines mineralisierungskartuschenseitigen Anschlusselementes 41.

Die betriebsgemäße Ausrichtung ist wie in der Figur 10 dargestellt, mit Tankboden 3.1 unten und darin eingesetzter Mineralisierungskartusche 39.

Im Unterschied zur Darstellung in der Figur 2 sind bei dieser in einem Wassertank 3 eingesetzten Ausführungsform der Mineralisierungskartusche 39 Wassereinlass 9.1 und Wasserauslass 9.2 aus gravimetrischen Gründen im unteren Bereich der Mineralisierungskartusche 39 ausgebildet.

Die Mineralisierungskartusche 39 umfasst ein vorzugsweise kappenartig ausgebildetes Gehäuse 40 und ein dieses, in der dargestellten Ausrichtung, bodenseitig verschließendes, mineralisierungskartuschenseitiges Anschlusselement 41 zum Anschluss an das wassertankseitige Anschlusselement 8.

Im Inneren des Gehäuses 40 sind zwei Trennwände 42 und 43 angeordnet. Diese teilen das Volumen der Mineralisierungskartusche 39 radial einwärts in drei Kammern 40.1, 42.1 und 43.1. Die Kammer 42.1 bildet die bereits aus der Figur 2 bekannte Salzkammer 17.1.1. In ihr ist ein Zulaufrohr 44 angeordnet, über welches das vom Wassereinlass 39.1 über die Kammer 40.1 im Aufstrom in die Mineralisierungskartusche 39 einströmende, aufzumineralisierende Trinkwasser in Bodennähe in die Salzkammer 17.1.1 eingeleitet wird. Dadurch wird sichergestellt, dass das aufzumineralisierende Wasser beim Aufstieg das Bett des Mineralisierungssalzes durchströmt und dabei zur gesättigten Lösung wird.

Im inneren oberen Bereich der Mineralisierungskartusche 39 ist, entsprechend wie in der Figur 2, eine Dosiervorrichtung 20 mit einer Trennwand 20.1 angeordnet. Gleiche Bezugszeichen bezeichnen im Übrigen in dieser Ausführungsform gleiche Merkmale wie in den vorangehend beschriebenen Ausführungsformen.

Dementsprechend weist die Dosiervorrichtung 20 die gleichen Merkmale auf wie die zur Figur 2 oben beschriebene Dosiervorrichtung 20. Z.B. Drossel 20.2.1, Prallplatte 20.2.1.1, mindestens einen Drosselkanal 20.2.1.2 für den Hauptstrom 22, Durchlass 20.2.1.3 als Zulauf in die Salzkammer 17.1.1, Kapillare 20.2.1.3.3 und Mischkammer 19.

Auch hier symbolisieren die Dicken der Pfeile das Verhältnis zwischen den einzelnen Wasserströmen, insbesondere zwischen Hauptstrom 22 und Dosierstrom 21.

Der Druckunterschied dP zwischen P1 und P2 fällt auch hier über der Drossel 20.2.1, insbesondere über dem mindestens einen Drosselkanal 20.2.1.2 ab.

In der Kammer 40.1 kann Filtermaterial angeordnet sein, z.B. Entkalkungsmittel.

Bezugszeichenliste:

1 Getränkebereiter
2 Gehäuse
3 Wassertank
3.1 Boden
3.2 Wand
4 Wasserleitung
5 Wasserleitung
6 Wasserleitung
7 Wasserpumpe
8 Anschlusskopf / Anschlusselement
8.1 Wassereinlass
8.2 Wasserauslass
8.3 anschlusskopfseitiger Anschluss
9 Mineralisierungskartusche
9.1 Wassereinlass
9.2 Wasserauslass
10 Konzentrationseinstellvorrichtung
11 Kontrolleinheit
12 Eingabeeinheit
13 Anzeigeeinheit
14 Verbindungsleitung
15 Verbindungsleitung
16 Glas
17 Gehäuse
17.1 unteres Gehäuseteil
17.1.1 Salzkammer
17.1.1.1 oberer Bereich
17.1.1.2 unterer Bereich

17.2 oberes Gehäuseteil

17.2.1 Wasserführungselement

17.2.1.1 Zulaufkanal

17.2.1.2 Auslaufkanal

17.3 Verbindungsstelle

17.4 kartuschenseitiges Anschlusselement

18 Rohr

19 Mischkammer

19.1 Trennwand

20 Dosiervorrichtung

20.1 Trennwand

20.2 Hülse

20.2.1 Drossel

20.2.1.1 Prallplatte

20.2.1.2 Drosselkanal

20.2.1.2.1 Hauptstrom

20.2.1.3 Durchlass

20.2.1.3.1 Dosierstrom

20.2.1.3.2 Auslass Salzkammer

20.2.1.3.3 Kapillare

21 Pfeil/Dosierstrom

22 Pfeil/Hauptstrom

23 Pfeil/Zustrom

24 Pfeil/Abstrom

28 Abstromrohr

29 Filter

30 Dosiervorrichtung

30.1 Trennwand

30.2.1 Drossel

30.2.1.1 Prallplatte

30.2.1.2 Drosselkanal

30.2.1.2.1 Hauptstrom

30.2.1.3 Durchlass

30.2.1.3.1 Dosierstrom

30.2.1.3.2 Auslass Salzkammer

30.2.1.3.3 Kapillare

30.3 Kreuzstromelement

30.3.1 Kreuzkanal

39 Mineralisierungskartusche

39.1 Wassereinlass

39.2 Wasserauslass

40 Gehäuse

40.1 Kammer

41 mineralisierungskartuschenseitiges Anschlusselement

42 Trennwand

42.1 Kammer

43 Trennwand

43.1 Kammer

44 Zulaufrohr

**Patentansprüche**

1. Mineralisierungskartusche (9; 39) mit einem Anschlusselement (17.4; 41) zum Anschluss an einen Anschlusskopf oder ein Anschlusselement (8) eines Getränkebereiters (1), wobei die Mineralisierungskartusche (9; 39) weiter umfasst, einen Wassereinlass (9.1), einen Wasserauslass (9.2) und eine Strömungskanalgeometrie (20; 30), insbesondere eine Dosiervorrichtung (20; 30), für die Aufteilung eines mit Mineralien anzureichernden Wasserstroms (23) in einen Hauptstrompfad (20.2.1.2.1; 30.2.1.2.1) und in einen Dosierstrompfad (20.2.1.3.1; 30.2.1.3.1), **dadurch**

**gekennzeichnet, dass** der Hauptstrompfad (20.2.1.2.1; 30.2.1.2.1) und der Dosierstrompfad (20.2.1.3.1; 30.2.1.3.1) verschiedene Abhängigkeiten von dem sie durchfließenden Volumenstrom in Bezug auf einen im Betrieb der Mineralisierungskartusche über die Dosiervorrichtung (20; 30) auftretenden Druckunterschied dP aufweisen.

2. Mineralisierungskartusche (9; 39) nach Anspruch 1, **dadurch gekennzeichnet, dass** die Dosiervorrichtung (20, 30) eine vom Durchsatzvolumen des durch die Mineralisierungskartusche (9) fließenden Wasserstroms abhängige Dosiercharakteristik aufweist.

3. Mineralisierungskartusche (9; 39) nach Anspruch 1 oder 2, **dadurch gekennzeichnet, dass** der den Hauptstrompfad (20.2.1.2.1; 30.2.1.2.1) durchfließende Volumenstrom eine quadratische Auswirkung in Bezug auf den im Betrieb der Mineralisierungskartusche (9; 39) über die Dosiervorrichtung (20; 30) auftretenden Druckunterschied dP aufweist und der den Dosierstrompfad (20.2.1.3.1; 30.2.1.3.1) durchfließende Volumenstrom eine lineare Auswirkung.

4. Mineralisierungskartusche (9; 39) nach einem der Ansprüche 1 bis 3, **dadurch gekennzeichnet, dass** der den Hauptstrompfad (20.2.1.2.1; 30.2.1.2.1) durchfließende Volumenstrom in Bezug auf den im Betrieb der Mineralisierungskartusche (9) über die Dosiervorrichtung (20; 30) auftretenden Druckunterschied dP eine Strömungscharakteristik gemäß der Bernoulli-Gleichung aufweist und der den Dosierstrompfad (20.2.1.3.1; 30.2.1.3.1) durchfließende Volumenstrom eine laminare Strömungscharakteristik.

5. Mineralisierungskartusche (9; 39) nach einem der Ansprüche 1 bis 4, **dadurch gekennzeichnet, dass** der Hauptstrompfad (20.2.1.2.1; 30.2.1.2.1) eine Drossel (20.2.1; 30.2.1) in der Form einer Lochblende umfasst und der Dosierstrompfad (20.2.1.3.1; 30.2.1.3.1) eine Kapillare (20.2.1.3.3; 30.2.1.3.3).

6. Mineralisierungskartusche (9; 39) nach einem der Ansprüche 1 bis 5, **dadurch gekennzeichnet, dass** die Dosiercharakteristik der Dosiervorrichtung (20; 30) einen unteren Schwellwert bei 0,3 bis 0,5 Liter pro Minute Durchsatzvolumen und/oder bei einem Druck von 0,02 bar aufweist.

7. Mineralisierungskartusche (9; 39) nach einem der Ansprüche 1 bis 6, **dadurch gekennzeichnet, dass** die Dosiercharakteristik der Dosiervorrichtung (20; 30) einen oberen Schwellwert bei 3,0 bis 4,0 Liter pro Minute Durchsatzvolumen und/oder bei einem Druck 2,0 bis 3,0 bar aufweist.

8. Mineralisierungskartusche (9; 39) nach einem der Ansprüche 1 bis 7, **dadurch gekennzeichnet, dass** die Dosiercharakteristik so ausgebildet ist, dass zumindest bei einem Betrieb der Mineralisierungskartusche (9; 39) zwischen unterem und oberem Schwellwert bei einer Verdoppelung des durch den Hauptstrompfad geführten Wasserstroms annähernd eine Verdoppelung des Dosierverhältnisses für den mit Mineralien anzureichernden Wasserstrom bewirkt wird.

9. Mineralisierungskartusche (9; 39) nach einem der Ansprüche 1 bis 8, **dadurch gekennzeichnet, dass** die Dosiervorrichtung (20; 30) eine Drossel (20.2.1) umfasst, die aufweist: eine hülsenartige Struktur (20.2) mit einer Einlassseite für den mit Mineralien anzureichernden Wasserstrom, eine Prallplatte (20.2.1.1) und erste, den Wasserstrom des Hauptstrompfades entgegen seiner Einströmrichtung in die Drossel (20.2.1), weiterführende Drosselkanäle (20.2.1.2).

10. Mineralisierungskartusche (9; 39) nach einem der Ansprüche 1 bis 9, **dadurch gekennzeichnet, dass** die Dosiervorrichtung (30) eine Drossel (30.2.1) umfasst, die aufweist: eine Einlassseite für den mit Mineralien anzureichernden Wasserstrom, eine Prallplatte (30.2.1.1) und erste, den Wasserstrom des Hauptstrompfades (30.2.1.2.1) entlang seiner Einströmrichtung in die Drossel (30.2.1), weiterführende Drosselkanäle (20.2.1.2).

11. Mineralisierungskartusche (9; 39) nach einem der Ansprüche 1 bis 10, **dadurch gekennzeichnet, dass** die ersten weiterführenden Drosselkanäle der Drossel (20.2.1; 30.2.1) gleichmäßig am betreffenden Umfang der hülsenartige Struktur verteilt angeordnet sind.

12. Mineralisierungskartusche (9; 39) nach einem der Ansprüche 1 bis 11, **dadurch gekennzeichnet, dass** die ersten weiterführenden Drosselkanäle der Drossel (20.2.1; 30.2.1) so ausgebildet sind, dass sie den mit Mineralien anzureichernden Wasserstrom des Hauptstrompfades in eine Mischkammer (17.1.1) leiten.

13. Mineralisierungskartusche (9; 39) nach einem der Ansprüche 1 bis 12, **dadurch gekennzeichnet, dass** die ersten weiterführenden Drosselkanäle der Drossel (20.2.1; 30.2.1) so ausgebildet sind, dass sie einen Drosselquerschnitt ausbilden, der im Bereich von 4 mm$^2$ bis 40 mm$^2$ liegt.

14. Mineralisierungskartusche (9; 39) nach einem der Ansprüche 1 bis 13, **dadurch gekennzeichnet, dass** die Drossel (20.2.1; 30.2.1) mindestens einen weiteren Durchlass (20.2.1.3; 30.2.1.3) aufweist, der so ausgebildet ist, dass dieser Durchlass(20.2.1.3; 30.2.1.3) den mit Mineralien anzureichernden Wasserstrom des Dosierstrompfades über eine Salzkammer (17.1.1) zu einer in die Mischkammer (19)führenden Kapillare (20.2.1.3.3; 30.2.1.3.3) leitet.

15. Mineralisierungskartusche (9; 39) nach einem der Ansprüche 1 bis 14, **dadurch gekennzeichnet, dass** die Kapillare (20.2.1.3.3; 30.2.1.3.3) so ausgebildet ist, dass sie eine Länge aufweist, die im Bereich von 3 mm bis 60 mm liegt und/oder einen Durchmesser aufweist, der im Bereich von 0,2 mm bis 0,5 mm liegt.

16. Mineralisierungskartusche (9; 39) nach einem der Ansprüche 1 bis 15, **dadurch gekennzeichnet, dass** die Mineralisierungskartusche ein Kommunikationselement beinhaltet.

17. Mineralisierungskartusche (9; 39) nach einem der Ansprüche 1 bis 16, **dadurch gekennzeichnet, dass** die Mineralisierungskartusche ein Kommunikationselement zur Kommunikation mit einem Kommunikationselement in einem Getränkebereiter beinhaltet.

18. Mineralisierungskartusche (9; 39) nach einem der Ansprüche 1 bis 17, **dadurch gekennzeichnet, dass** die Mineralisierungskartusche ein Kommunikationselement mit einem kartuschenspezifischen Datenspeicher beinhaltet.

19. Mineralisierungskartusche (9; 39) nach einem der Ansprüche 1 bis 18, **dadurch gekennzeichnet, dass** die Mineralisierungskartusche ein Kommunikationselement mit einem kartuschenspezifischen Datenspeicher beinhaltet, der über den Getränkebereiter ausgelesen und/oder beschrieben werden kann

20. Mineralisierungskartusche (9; 39) nach einem der Ansprüche 1 bis 19, **dadurch gekennzeichnet, dass** die Mineralisierungskartusche ein Kommunikationselement zur drahtlosen und/oder berührungsfreien Kommunikation mit einem Kommunikationselement im Getränkebereiter beinhaltet.

21. Mineralisierungskartusche (9; 39) nach einem der Ansprüche 1 bis 20, **dadurch gekennzeichnet, dass** eine drahtlose Energieübertragung zwischen dem Kommunikationselement der Mineralisierungskartusche und dem Kommunikationssystem des Getränkebereiters vorgesehen ist.

Fig. 1

Fig. 2

Fig. 3

Fig. 4

Fig. 5

Fig. 6

Fig. 7

Fig. 8

Fig. 9

Fig. 10

Europäisches
Patentamt

European
Patent Office

Office européen
des brevets

# EUROPÄISCHER RECHERCHENBERICHT

**Nummer der Anmeldung**

**EP 23 20 4210**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 2018/016774 A1 (CHERNOV GREGORY SERGEEVICH [US] ET AL) 18. Januar 2018 (2018-01-18) * Abbildungen 1-4 * * Absatz [0020] – Absatz [0049] * ----- | 1-21 | INV. B01F25/316 B67D1/00 C02F1/68 |
| X,D | DE 10 2020 106940 A1 (AQUIS WASSER LUFT SYSTEME GMBH LINDAU ZWEIGNIEDERLASSUNG REBSTEIN [CH]) 17. September 2020 (2020-09-17) * das ganze Dokument * ----- | 1-21 | |
| A | US 2021/101809 A1 (FARLEY SARAH [US] ET AL) 8. April 2021 (2021-04-08) * Abbildung 3 * * Absatz [0015] – Absatz [0023] * * Absatz [0056] – Absatz [0066] * ----- | 1-21 | |

**RECHERCHIERTE SACHGEBIETE (IPC)**

B01F
B67D
C02F

Der vorliegende Recherchenbericht wurde für alle Patentansprüche erstellt

| Recherchenort | Abschlußdatum der Recherche | Prüfer |
|---|---|---|
| Den Haag | 19. Dezember 2023 | Châtellier, Xavier |

**ANHANG ZUM EUROPÄISCHEN RECHERCHENBERICHT
ÜBER DIE EUROPÄISCHE PATENTANMELDUNG NR.**

EP 23 20 4210

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

19-12-2023

| Im Recherchenbericht angeführtes Patentdokument | Datum der Veröffentlichung | Mitglied(er) der Patentfamilie | Datum der Veröffentlichung |
|---|---|---|---|
| US 2018016774 A1 | 18-01-2018 | KEINE | |
| DE 102020106940 A1 | 17-09-2020 | AU 2020244101 A1 | 23-09-2021 |
| | | CA 3133738 A1 | 24-09-2020 |
| | | CN 113573792 A | 29-10-2021 |
| | | DE 102020106940 A1 | 17-09-2020 |
| | | EP 3938074 A1 | 19-01-2022 |
| | | JP 7268185 B2 | 02-05-2023 |
| | | JP 2022524128 A | 27-04-2022 |
| | | KR 20210134754 A | 10-11-2021 |
| | | US 2022177336 A1 | 09-06-2022 |
| | | WO 2020187745 A1 | 24-09-2020 |
| US 2021101809 A1 | 08-04-2021 | CN 112608050 A | 06-04-2021 |
| | | EP 3800164 A1 | 07-04-2021 |
| | | US 2021101809 A1 | 08-04-2021 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

**In der Beschreibung aufgeführte Patentdokumente**

- DE 102020106940 A1